# FASCICULE DE BREVET EUROPEEN

(11) **EP 1 221 115 B1**
(45) Date de publication et mention de la délivrance du brevet: **13.06.2007**
(21) Numéro de dépôt: 00954836.3
(22) Date de dépôt: 06.09.2000
(51) Int. Cl.: G06F 17/30, H04N 7/16

(54) **PROCEDE ET SYSTEME DE TRANSMISSION DE MESSAGES POUR BASE DE DONNEES**
VERFAHREN UND NACHRICHTENÜBERTRAGUNGSSYSTEM FÜR DATENBANKEN
METHOD AND SYSTEM FOR TRANSMITTING MESSAGES FOR DATABASE

(30) Priorité: 10.09.1999 CH 166099
(43) Date de publication de la demande: 10.07.2002
(73) Titulaire: NagraCard SA, 1033 Cheseaux-sur-Lausanne (CH)
(72) Inventeur: BRIQUE, Olivier, CH-1052 Le Mont-sur-Lausanne (CH); NICOLAS, Christophe, CH-1028 Préverenges (CH); SASSELLI, Marco, CH-1803 Chardonne (CH)
(74) Mandataire: Wenger, Joel-Théophile
(86) Numéro de dépôt international: PCT/IB2000/001259
(87) Numéro de publication internationale: WO 2001/020492

(56) Documents cités:
- EP-A- 0 491 069
- FR-A- 2 696 854

## Description

La présente invention concerne un procédé et système de mise à jour de base de données, en particulier pour une base de données à accès unidirectionnel.

Dans un système comprenant un centre de gestion disposant d'une base de données principale, et une pluralité d'abonnés disposant chacun d'une base de données d'abonnés repartis sur un vaste territoire, il est connu d'envoyer par voie téléphonique ou hertzienne des informations de mise à jour de la base de données de ces abonnés. Ces messages s'adressent, soit à tous les abonnés, soit à un abonné particulier, c'est-à-dire qu'ils contiennent une adresse de module abonné.

Du fait que certains systèmes de ce type n'utilisent pas de voie de retour vers le centre de gestion telle que par liaison modem par exemple, il est difficile pour celui-ci de savoir si les informations envoyées sont arrivées correctement. De ce fait, il est contraint de répéter ces messages périodiquement afin de s'assurer qu'au moins une fois le message est bien arrivé à destination.

On imagine aisément ce que cela a pour conséquence dans un système mettant en oeuvre un grand nombre d'abonnés, par exemple 2 à 3 millions, la répétition de ces messages pouvant saturer rapidement les capacités de transmission.

Dans un système de ce genre, le canal de transmission est majoritairement utilisé pour la transmission de données utiles que ce soit audio, vidéo ou des données et les informations d'administration, à destination des bases de données d'abonné, ne peuvent occuper qu'une place très limitée.

Un tel système est décrit dans le brevet européen EP 0 616 714, et traite le problème de la mise à jour d'une base de données définie dans une carte mémoire intelligente. Les commandes sont de type simple et sont toutes destinées à inscrire des informations dans cette base de données. Bien que cette structure apporte un avantage sur les solutions antérieures, c'est-à-dire basées sur une structure figée par fournisseur de programme, elle ne permet pas d'effectuer des personnalisations ou traitements plus subtils.

Un autre exemple des limites de l'adressage existant est illustré dans le document EP 0 491 069. Chaque base de données comprend un identificateur unique utilisé pour adresser cette base. Ainsi, lorsqu'un grand nombre de bases de données doivent être mise à jour, elles doivent être adressées séquentiellement.

Ainsi, on réalise que l'on est vite limité si l'on veut utiliser des fonctions plus sophistiquées, par exemple offrir un mois d'abonnement gratuit à une nouvelle chaîne à tous les abonnés ayant souscrit leur abonnement depuis au moins un an. Dans un tel cas de figure, selon les techniques de transmission actuelles, on détermine sur la base de données principale dans le centre de gestion, la liste des abonnés répondant à ce critère, et on formate puis envoie sur le réseau un message à chaque heureux élu, message contenant l'adresse du destinataire.

Il ne faut pas oublier que ces messages doivent être répétés périodiquement pour s'assurer que chaque abonné a eu la possibilité de le recevoir.

A l'heure actuelle, de telles fonctions sont très difficilement possibles car elles peuvent saturer complètement le système avec la transmission de messages d'administration. L'adressage spécifique est dès lors utilisé pour la mise en service d'un abonné et son dépannage suite à un appel de sa part au central de gestion.

Lorsque l'on considère les bases de données d'abonné selon l'état de la technique, on constate que ces bases de données ne contiennent que les informations permettant l'accès aux émissions transmises. Les informations dites "systèmes" telles que le numéro d'abonné, sont mémorisées indépendamment. C'est sur ces données systèmes que l'on détermine si un message est destiné à la base de données considérée. Il n'est fait aucune requête à l'intérieur de la base de données, le test utilisant les informations systèmes.

Le but de la présente invention est de proposer un procédé qui permette la transmission de messages s'adressant à un ensemble d'abonnés non défini préalablement.

Ce but est pleinement atteint par un procédé de transmission de messages de mise à jour de base de données à partir d'un centre de gestion à destination d'une pluralité de bases de données réparties, chaque base de données comprenant des données système et des données utiles, caractérisé en ce que ces messages comprennent des données et des commandes incluant des requêtes sur le contenu d'une base de données répartie, lesdites commandes effectuant des mises à jour conditionnelles de la base de données répartie selon la présence ou l'absence de données utiles prédéterminées dans le contenu de la base de données répartie.

Par données utiles, on entend les données pour lesquelles la base de données a été prévue, par opposition aux données systèmes qui définissent la structure de la base et permettent de définir son adresse ou identificateur.

Lors de la mise en service d'une telle base de données, celle-ci ne contient en principe aucunes données utiles alors que toutes les données systèmes sont définies.

Selon l'invention, ce procédé permet d'effectuer des opérations complexes directement sur les données utiles de chaque base d'abonnés afin de déterminer si telle donnée transmise est destinée à cette base de données.

Dans le cadre de l'exemple susmentionné, les données relatives à l'autorisation d'accès à la nouvelle chaîne sont conditionnées à une requête sur le contenu de la base, en particulier la date de la souscription à l'abonnement de référence. Ainsi, les opérations effectuées dans le centre de gestion consistant à déterminer les abonnés bénéficiant de l'offre promotionnelle sont effectuées également au niveau de la base de données de chaque abonné.

Grâce à ce procédé, un ensemble d'abonnés non défini à l'avance (par exemple 120'000 fans de football) va pouvoir bénéficier d'une nouvelle chaîne sportive (par exemple pour une période d'essai) par l'envoi d'une seule commande sur le réseau. Précédemment, il aurait fallu envoyer 120.000 commandes sur le réseau, soit une commande pour chaque abonné bénéficiaire.

Les requêtes effectuées par ce langage de commande peuvent être simples, par exemple la date de souscription d'un abonnement, ou complexe, par exemple une opération de sélection sur plusieurs critères.

Il est connu dans les systèmes de télévision à péage, d'offrir la possibilité d'acheter la projection d'émissions telles que des films récents ou la retransmission d'un match de football. L'utilisateur, grâce à la fonction "pay-per-view" débite son compte auprès du fournisseur d'accès vidéo pour la visualisation de son émission préférée.

La base de données mémorise les émissions achetées à des fins de statistiques (par exemple financières) ou de consultation ultérieure par l'abonné. Grâce au procédé selon l'invention, il est possible de proposer une réduction, par exemple de 50%, sur l'achat de la prochaine émission du même type. Cette offre est contenue dans un message qui comporte une requête de type complexe puisqu'elle va d'abord extraire de la base de données les informations concernant les émissions achetées précédemment, effectuer les vérifications nécessaires et, selon le résultat de la vérification, inscrire dans la base les informations relatives à cette nouvelle offre. Toutes ces opérations sont contenues dans un seul message.

Afin d'exprimer ce type de message, un nouveau format de message est proposé dans le cadre de cette invention qui permet la transmission de commandes complexes. On peut aisément imaginer que la transmission d'une commande peut difficilement contenir la requête telle que décrite précédemment. C'est pour cela qu'il est proposé un message contenant un ensemble de blocs de commande, chaque bloc de commande traitant une requête unitaire et, selon le résultat, pouvant décider de la suite à donner.

Selon cette forme de construction de message, un bloc de commande comprend une requête sur la base de données pouvant faire intervenir plusieurs données contenu dans la base de données, une donnée ou des données de comparaison et une action selon le résultat de ces comparaisons.

Par action selon le résultat de comparaison, on entend, soit l'arrêt du traitement du message (fonction stop), soit le traitement du bloc de commande suivant (fonction continue) ou soit l'exécution du bloc numéro x (fonction saut).

Il est possible, grâce à cette structure, de réaliser des fonctions évoluées dans un seul message.

La présente invention concerne également un système de préparation de messages d'administration, de préférence en langage évolué tel que SQL, et un système de transmission de message comprenant un centre de gestion et une pluralité de bases de données réparties, chaque base de données comprenant des données système et des données utiles, caractérisé en ce que ces messages comprennent des données et des commandes incluant des requêtes sur le contenu d'une base de données répartie, lesdites commandes étant aptes à effectuer des mises à jour conditionnelles de la base de données répartie selon la présence ou l'absence de données utiles prédéterminées dans le contenu de la base de données répartie.

Le système selon l'invention transmet des messages comprenant des requêtes qui conditionnent la mise à jour de la base de données. Ce système met en oeuvre le procédé décrit plus haut.

Cette invention concerne également un interpréteur de langage évolué pour base de données traitant une base de données dans un environnement mettant en oeuvre un centre de gestion et une pluralité de bases de données d'abonnés réparties, chaque base de données comprenant des données systèmes et des données utiles, cet interpréteur recevant des messages de mise à jour, caractérisé en ce ces messages comprennent des données et des commandes incluant des requêtes sur le contenu d'une base de données répartie, lesdites commandes étant aptes à effectuer des mises à jour conditionnelles de la base de données répartie selon la présence ou l'absence de données utiles prédéterminées dans le contenu de la base de données répartie.

Le module d'abonnés comprend schématiquement un récepteur de données, soit audio, soit vidéo ou numérique, un décodeur en charge de séparer les données des messages d'administration, ces derniers étant aiguillé vers un module de sécurité comprenant la base de données d'abonnés. Dans une forme d'exécution, ce module est directement monté dans le module d'abonné ou, pour des raisons de sécurité et de coût, ce module se présente sous la forme d'une carte intelligente détachable. La base de données d'abonné, de même que l'interpréteur sont localisés sur cette carte intelligente. L'interpréteur reçoit de la part du décodeur les messages d'administration servant à définir les différents droits liés aux fournisseurs de services ou d'émissions.

L'interpréteur selon l'état de la technique est en charge de l'organisation et de la mise à jour de la base de données. Il reçoit les commandes de mise à jour et détermine l'emplacement où stocker ces informations. Un exemple d'un tel interpréteur est décrit dans le brevet EP 0 616 714. L'interpréteur selon l'invention, non seulement organise la base de données, mais effectue également des opérations de requête sur ladite base afin de vérifier les conditions de mise à jour, et, si le format du message est du type à blocs de commandes multiples, exécute la condition attachée à cette comparaison qui pour mémoire permet, soit de terminer l'exécution du message, soit de poursuivre par le bloc suivant ou sauter à un bloc quelconque.

Ce type d'interpréteur peut être placé comme gestionnaire d'une base de données de type segmentée ou d'une base de type relationnelle. On entend par base de type segmentée, une base pour laquelle on crée un secteur par fournisseur de service et où l'on stocke les droits relatifs à ce fournisseur dans cette section. On entend par base de données relationnelles, une base dans laquelle les informations sont stockées dans une place quelconque, seul le lien permettant de les retrouver est lié au descripteur du fournisseur concerné. On constate que ce type d'interpréteur n'est pas tributaire du type de base et peut s'appliquer sur une structure de base quelconque.

Dans une forme particulière de l'invention, les requêtes définissant la mise à jour conditionnelle se basent sur le numéro unique d'abonné, le numéro d'appartenance à un groupe, par exemple le code postal, ou le ou les abonnement souscrits.

Selon un aspect de l'invention, tous les paramètres dits systèmes sont stockés dans la base de données.

Un avantage que procure ce type de message est de supprimer les effets de répétition. En effet, nous avons vu que les commandes sont envoyées de multiples fois pour s'assurer qu'elles ont été bien reçues par l'unité d'abonné. Dans ce cas, selon l'état de la technique, une mise à jour sera effectuée un grand nombre de fois, utilisant inutilement les capacités de traitement de l'interpréteur de base de données. Pour éviter cela, il suffit de rajouter une condition pour que la mise à jour ne soit effectuée que si elle ne l'a pas encore été.

Un autre avantage de cette invention est de pouvoir procéder à des vérifications de la base de données d'abonné en envoyant des messages ayant pour mission d'effectuer un certain nombre d'opération sur les droits de cet abonné, et dans le cas où le résultat diffère de celui attendu, une action peut être ordonnée.

Dans une forme particulière de réalisation de l'invention, le résultat de la requête peut engendrer une notification du module de sécurité vers le module d'abonné, pour exécution d'une action. Par action on entend par exemple un affichage d'un message sur l'écran, une sonnerie ou plus généralement un signal de nature sonore, ou encore la formation d'un appel téléphonique sur un modem connecté au réseau téléphonique public.

## Revendications

1. Procédé de transmission de messages de mise à jour de base de données à partir d'un centre de gestion à destination d'une pluralité de bases de données réparties, chaque base de données comprenant des données système et des données utiles, **caractérisé en ce que** ces messages comprennent des données et des commandes incluant des requêtes sur le contenu d'une base de données répartie, lesdites commandes effectuant des mises à jour conditionnelles de la base de données répartie selon la présence ou l'absence de données utiles prédéterminées dans le contenu de la base de données répartie.

2. Procédé de transmission selon la revendication 1, **caractérisé en ce que** la liaison entre le centre de gestion et les bases de données est unidirectionnelle.

3. Procédé de transmission selon les revendications 1 et 2, **caractérisé en ce que** ces bases de données sont intégrées dans des unités d'abonnés de réception de télévision à péage et que les données utiles comprennent les droits de réception d'un abonné.

4. Procédé de transmission selon les revendications 1 à 3, dans lequel les messages de mise à jour comprennent un ensemble de blocs de commandes comprenant des données et des commandes, **caractérisé en ce qu'**il consiste à effectuer des opérations de comparaison entre les données et le contenu de la base de données et à déterminer une action qui consiste, soit à mettre à jour la base de données, soit à exécuter le bloc de commande suivant, soit à sauter à un autre bloc de commande, soit à terminer le traitement du message.

5. Procédé de transmission selon les revendications 1 à 4, **caractérisé en ce que** la base de données est de type segmenté ou de type relationnelle RDB.

6. Système de transmission de message comprenant un centre de gestion et une pluralité de bases de données réparties, chaque base de données comprenant des données système et des données utiles, **caractérisé en ce que** ces messages comprennent des données et des commandes incluant des requêtes sur le contenu d'une base de données réparties, lesdites commandes étant aptes à effectuer des mises à jour conditionnelles de la base de données répartie selon la présence ou l'absence de données utiles prédéterminées dans le contenu de la base de données répartie.

7. Système de transmission de message selon la revendication 6, **caractérisé en ce que** la transmission entre le centre de gestion et les bases de données est unidirectionnelle.

8. Système de transmission de message selon la revendication 6, **caractérisé en ce que** ces bases de données sont intégrées dans des unités d'abonnés de réception de télévision à péage et que les données utiles comprennent les droits de réception d'un abonné.

9. Système de transmission de message selon les revendications 6 à 8, **caractérisé en ce que** ces messages de mise à jour comprennent des blocs de commandes comprenant des données et des commandes aptes à effectuer des opérations de comparaison entre les données et le contenu de la base de données et à déterminer une action consistant, soit à mettre à jour la base de données, soit à exécuter le bloc de commande suivant, soit à sauter à un autre bloc de commande, soit à terminer le traitement du message.

10. Système de transmission de message selon les revendications 6 à 9, **caractérisé en ce que** la base de données est de type segmenté ou de type relationnelle RDB.

11. Interpréteur de langage évolué pour base de données traitant une base de données dans un environnement mettant en oeuvre un centre de gestion et une pluralité de bases de données d'abonnés réparties, chaque base de données comprenant des données systèmes et des données utiles, cet interpréteur recevant des messages de mise à jour, **caractérisé en ce** ces messages comprennent des données et des commandes incluant des requêtes sur le contenu d'une base de données répartie, lesdites commandes étant aptes à effectuer des mises à jour conditionnelles de la base de données répartie selon la présence ou l'absence de données utiles prédéterminées dans le contenu de la base de données répartie.

12. Interpréteur de langage évolué selon la revendication 11, **caractérisé en ce que** ces messages de mise à jour comprennent des blocs de commande comprenant des données et des commandes aptes à effectuer des opérations de comparaison entre les données et le contenu de la base de données et à déterminer une action consistant, soit à mettre à jour la base de données, soit à exécuter le bloc suivant ou soit à sauter à un autre bloc de commande ou soit à terminer le traitement dudit message.

13. Interpréteur de langage évolué pour base de données selon la revendication 12, **caractérisé en ce que** la base de données est connectée à un module d'abonné de télévision à péage et que l'action consiste à retourner un message vers le module d'abonné pour exécution d'une action dans ledit module d'abonné.

## Claims

1. Transmission process of messages for updating databases from a managing centre towards a plurality of distributed databases, each database comprising system data and useful data, **characterized in that** these messages comprise data and controls including requests on the content of a distributed database, said controls carrying out conditional updates of the distributed database according to the presence or the absence of predetermined useful data in the content of the distributed database.

2. Transmission process according to claim 1, **characterized in that** the connection between the managing centre and the databases is mainly unidirectional.

3. Transmission process according to claims 1 and 2, **characterized in that** these databases are integrated in Pay-TV reception subscriber's units and that the useful data comprise the reception rights of a subscriber.

4. Transmission process according to claims 1 to 3, **characterized in that** these updating messages comprise a set of control-blocks comprising data and controls, and which consists in carrying out comparison operations between the data and the contents of the database and determine an action which consists, either to update the database, carry out the subsequent control block, or to jump to another control block, or to terminate the processing of the message.

5. Transmission process according to claims 1 to 4, **characterized in that** the database is of segmented type or is of the relational type RDB.

6. Transmission system of message comprising a managing centre and a plurality of distributed databases, each database comprising system data and useful data, **characterized in that** these messages comprise data and controls including requests on the content of a distributed database, said controls being able to carry out conditional updates of the distributed database according to the presence or the absence of predetermined useful data in the content of the distributed database.

7. Transmission system of message according to claim 6, **characterized in that** the transmission between the managing centre and the databases is unidirectional.

8. Transmission system of message according to claim 6, **characterized in that** these databases are integrated in Pay-TV reception subscriber's units and that the useful data comprise the reception rights of a subscriber.

9. Transmission system of message according to claims 6 to 8, **characterized in that** these updating messages comprise control-blocks comprising data and controls, said controls determining an action which consists, either to update the database, or to carry out the subsequent control block, or to jump to another control block, or to terminate the processing of the message.

10. Transmission system of message according to claims 6 to 9, **characterized in that** the database is of segmented type or is of the relational type RDB.

11. Advanced language interpreter for databases processing a database in an environment providing a managing centre and a plurality of subscribers' distributed databases, each database comprising system data and useful data, this interpreter receiving updating messages, **characterized in that** these messages comprise data and controls including requests on the content of a distributed database, said controls being able to carry out conditional updates of the distributed database according to the presence or the absence of predetermined useful data in the content of the distributed database..

12. Advanced language interpreter according to claim 11, **characterized in that** these updating messages comprise control blocks comprising data and controls, that carries out comparison operations between the data and the contents of the database and determines an action which consists, either to update the database, carry out the subsequent block or jump to another control block, or to terminate the processing of said message.

13. Advanced language interpreter according to claim 12, **characterized in that** the database is connected to a Pay-TV subscriber module and that the action consists in returning a message towards the subscriber module for carrying out an action in said subscriber module.

## Patentansprüche

1. Verfahren zur Übertragung von Nachrichten für die Aktualisierung von Datenbanken von einem Verwaltungszentrum zu einer Mehrzahl von verteilten Datenbanken, wobei jede Datenbank Systemdaten und Nutzdaten umfasst, **dadurch gekennzeichnet, dass** diese Nachrichten Daten und Befehle enthalten, darunter Suchanforderungen bezüglich des Inhalts einer verteilten Datenbank, und die Befehle je nach dem Vorliegen oder Nichtvorliegen von im Voraus bestimmten Nutzdaten im Inhalt der verteilten Datenbank bedingte Aktualisierungen der verteilten Datenbank vornehmen.

2. Verfahren zur Übertragung nach Anspruch 1, **dadurch gekennzeichnet, dass** die Verbindung zwischen dem Verwaltungszentrum und den Datenbanken unidirektional ist.

3. Verfahren zur Übertragung nach Ansprüchen 1 und 2, **dadurch gekennzeichnet, dass** diese Datenbanken in Teilnehmereinheiten für den Gebührenfernsehempfang integriert sind und dass die Nutzdaten die Empfangsrechte eines Teilnehmers enthalten.

4. Verfahren zur Übertragung gemäss Ansprüchen 1 bis 3, worin die Aktualisierungsnachrichten einen Satz von Befehlsblöcken enthalten, die Daten und Befehle umfassen, **dadurch gekennzeichnet, dass** es darin besteht, Operationen eines Vergleichs zwischen den Daten und dem Inhalt der Datenbank auszuführen und eine Massnahme festzulegen, die darin besteht, entweder die Datenbank zu aktualisieren oder den folgenden Befehlsblock auszuführen, zu einem anderen Befehlsblock zu springen oder die Behandlung der Nachricht zu beenden.

5. Verfahren zur Übertragung nach Ansprüchen 1 bis 4, **dadurch gekennzeichnet, dass** die Datenbank vom segmentierten Typ oder vom relationellen Typ RDB ist.

6. System zur Übertragung von Nachrichten mit einem Verwaltungszentrum und einer Mehrzahl von verteilten Datenbanken, wobei jede Datenbank Systemdaten und Nutzdaten umfasst, **dadurch gekennzeichnet, dass** diese Nachrichten Daten und Befehle enthalten, darunter Suchanforderungen bezüglich des Inhalts einer verteilten Datenbank, und die Befehle je nach dem Vorliegen oder Nichtvorliegen von im Voraus bestimmten Nutzdaten im Inhalt der verteilten Datenbank bedingte Aktualisierungen der verteilten Datenbank vorzunehmen in der Lage sind.

7. System zur Übertragung von Nachrichten nach Anspruch 6, **dadurch gekennzeichnet, dass** die Übertragung zwischen dem Verwaltungszentrum und den Datenbanken unidirektional ist.

8. System der Übertragung von Nachrichten nach Anspruch 6, **dadurch gekennzeichnet, dass** diese Datenbanken in Teilnehmereinheiten für den Gebührenfernsehempfang integriert sind und dass die Nutzdaten die Empfangsrechte eines Teilnehmers enthalten.

9. System zur Übertragung von Nachrichten nach Ansprüchen 6 bis 8, **dadurch gekennzeichnet, dass** diese Aktualisierungsnachrichten Befehlsblöcke enthalten, die Daten und Befehle umfassen, die Operationen eines Vergleichs zwischen den Daten und dem Inhalt der Datenbank auszuführen und eine Massnahme festzulegen in der Lage sind, die darin besteht, entweder die Datenbank zu aktualisieren oder den folgenden Befehlsblock auszuführen, zu einem anderen Befehlsblock zu springen oder die Behandlung der Nachricht zu beenden.

10. System zur Übertragung von Nachrichten nach Ansprüchen 6 bis 9, **dadurch gekennzeichnet, dass** die Datenbank vom segmentierten Typ oder vom relationellen Typ RDB ist.

11. Interpreter höherer Sprachen für Datenbanken, der eine Datenbank in einer Umgebung betrifft, in der ein Verwaltungszentrum sowie eine Mehrheit von verteilten Teilnehmerdatenbanken funktionieren, wobei jede Datenbank Systemdaten und Nutzdaten umfasst und dieser Interpreter Aktualisierungsnachrichten empfängt, **dadurch gekennzeichnet, dass** diese Nachrichten Daten und Befehle enthalten, darunter Suchanforderungen bezüglich des Inhalts einer verteilten Datenbank, und die Befehle je nach dem Vorliegen oder Nichtvorliegen von im Voraus bestimmten Nutzdaten im Inhalt der verteilten Datenbank bedingte Aktualisierungen der verteilten Datenbank vorzunehmen in der Lage sind.

12. Interpreter höherer Sprachen nach Anspruch 11, **dadurch gekennzeichnet, dass** diese Aktualisierungsnachrichten Befehlsblöcke enthalten, die Daten und Befehle umfassen, die Operationen eines Vergleichs zwischen den Daten und dem Inhalt der Datenbank auszuführen und eine Massnahme festzulegen in der Lage sind, die darin besteht, entweder die Datenbank zu aktualisieren oder den folgenden Befehlsblock auszuführen, zu einem anderen Befehlsblock zu springen oder die Behandlung der Nachricht zu beenden.

13. Interpreter höherer Sprachen für Datenbanken nach Anspruch 12, **dadurch gekennzeichnet, dass** die Datenbank mit einem Gebührenfernseh-Teilnehmermodul verbunden ist und dass die Massnahme darin besteht, zum Teilnehmermodul eine Nachricht weiterzugeben, damit in diesem Teilnehmermodul eine Massnahme ausgeführt wird.
